# EUROPEAN PATENT APPLICATION

(11) **EP 4 361 932 A1**
(43) Date of publication of application: **01.05.2024**
(21) Application number: 24162281.0
(22) Date of filing: 08.03.2024
(51) Int. Cl.: G06Q 20/32, G06Q 20/02, G06Q 20/12, G06Q 20/38, G06Q 20/40, G06F 21/10

(54) **TECHNIQUES FOR MANAGING TRANSACTION TOKENS TO FACILITATE RECONCILIATION PROCEDURES**

(30) Priority: 24.01.2024 US 202463624723 P
(71) Applicant: Apple Inc., Cupertino, CA 95014 (US)
(72) Inventor: LEBEAU, Ross F., Cupertino, CA, 95014 (US); DUBOIS, Dana J., Cupertino, CA, 95014 (US); SHURMAN, Victoria L., Cupertino, CA, 95014 (US)
(74) Representative: Lang, Johannes

(57) **Abstract**

According to some embodiments, techniques for managing transaction tokens to facilitate reconciliation procedures are disclosed. One technique can be carried out by a transaction framework implemented on a computing device, and includes the steps of (1) receiving, from a software application executing on the computing device, a first request to perform a transaction, (2) providing, to a management entity, a second request to generate a transaction token for the transaction, (3) receiving the transaction token from the management entity, (4) displaying a user interface (UI) that indicates the transaction will be performed independent from the management entity, (5) receiving, via the UI, a selection of an option to approve the transaction, and (6) providing the transaction token to the software application or a developer entity associated with the software application, such that, when the transaction is performed, the transaction token enables a reconciliation procedure to be carried out.

## Description

### FIELD

The described embodiments relate generally to techniques for tracking transactions. More particularly, the described embodiments provide techniques for managing transaction tokens that enable reconciliation procedures to be carried out.

### BACKGROUND

In recent years there has been a proliferation of software applications designed to operate on computing devices such as desktops, laptops, tablets, mobile phones, and wearable devices. The increase is primarily attributable to computing devices running operating systems that enable third-party applications to be developed for and installed on the computing devices (alongside various "native" applications that typically ship with the operating systems). This approach provides innumerable benefits, not least of which includes enabling the vast number of worldwide developers to exercise their creativity by using powerful application programming interfaces (APIs) that are available through the aforementioned operating systems.

Different approaches can be utilized to enable users to install third-party software applications on their computing devices. For example, one approach involves an environment that is, for the most part, unrestricted in that developers are able to write software applications capable of accessing virtually every corner of the operating systems / computing devices onto which they will ultimately be installed. Under this approach, users typically also are able to freely download and install the software applications from any developer and/or distributor. In one light, this approach provides developers and users a considerably high level of flexibility in that they are able to participate in operating environments-as well as transaction (e.g., payment) environments-that are largely uninhibited. At the same time, this approach is rife with security drawbacks in that faulty, malicious, etc., software applications are pervasive and commonly installed by unassuming users.

To mitigate the foregoing deficiencies, an alternative approach involves implementing environments that are more restricted in comparison to the foregoing unrestricted environments. In particular, a restricted environment typically involves a software application store that is implemented by an entity that (typically) is also linked to the operating systems and/or computing devices onto which the software applications ultimately will be installed. Under this approach, developers are required to register with the software application store as a first line of vetting. In turn, the developers submit proposed software applications to the software application store for an analysis as to whether the software applications conform to various operating requirements, which constitutes a second line of vetting. Ultimately, when a software application is approved for distribution through the software application store, users are permitted to download the software application onto their computing devices. Users are also permitted to perform software application transactions-such as purchases, subscriptions, etc., associated with the software applications-through the software application store. Accordingly, this approach affords the benefit of considerable security enhancements in comparison to the aforementioned unrestricted environments, as well as streamlined billing practices that customers trust and with which they are familiar.

Regardless of which approach, environment, etc., is utilized, it can be beneficial to customers, developers, etc., to maintain a comprehensive view of transactions that take place in association with software applications. Accordingly, what is needed are techniques for enabling the comprehensive view of transactions to be formed, maintained, etc., especially when transaction flows are akin to the aforementioned unrestricted environments.

### SUMMARY

The described embodiments relate generally to techniques for tracking transactions. More particularly, the described embodiments provide techniques for managing transaction tokens that enable reconciliation procedures to be carried out.

One embodiment sets forth a method for managing transaction tokens to facilitate reconciliation procedures. According to some embodiments, the method can be implemented by a transaction framework implemented on a computing device, and includes the steps of (1) receiving, from a software application executing on the computing device, a first request to perform a transaction, (2) providing, to a management entity, a second request to generate a transaction token for the transaction, (3) receiving the transaction token from the management entity, (4) displaying a user interface (UI) that indicates the transaction will be performed independent from the management entity, where the UI includes a first option to approve the transaction, and a second option to cancel the transaction, (5) receiving, via the UI, a selection of the first option to approve the transaction, and (6) providing the transaction token to the software application or a developer entity associated with the software application, such that, when the transaction is performed, the transaction token enables a reconciliation procedure to be carried out.

Another embodiment sets forth another method for managing transaction tokens to facilitate reconciliation procedures. According to some embodiments, the method can be implemented by a management entity, and includes the steps of (1) receiving, from a transaction framework implemented on a computing device, a request to generate a transaction token for a transaction to be performed at least in part by a software application executing on the computing device, (2) verifying the software application and a developer entity associated with the software application, (3) generating the transaction token, (4) providing the transaction token to the transaction framework, (5) receiving (1) the transaction token, and (2) a transaction result associated with the transaction, and (6) performing a reconciliation procedure based on the transaction token and the transaction result.

Another embodiment sets forth another method for managing transaction tokens to facilitate reconciliation procedures. According to some embodiments, the method can be implemented by a software application executing on a computing device, and includes the steps of (1) receiving a first request to perform a transaction, (2) providing, to a transaction framework implemented on the computing device, a second request to perform the transaction, (3) displaying, under instruction of the transaction framework, a user interface (UI) that indicates the transaction will be performed independent from a management entity that is associated with the computing device, wherein the UI includes a first option to approve the transaction, and a second option to cancel the transaction, (4) receiving a transaction token from the transaction framework, wherein: the transaction token is provided in conjunction with receiving, via the UI, a selection of the first option to approve the transaction, and the transaction token corresponds to the transaction, and (5) providing the transaction token to a developer entity associated with the software application to cause the developer entity to perform the transaction, wherein, when the transaction is performed, the transaction token enables a reconciliation procedure to be carried out.

Yet another embodiment sets forth another method for managing transaction tokens to facilitate reconciliation procedures. According to some embodiments, the method can be implemented by a software application executing on a computing device, and includes the steps of (1) receiving a first request to perform a transaction, (2) providing, to a transaction framework implemented on the computing device, a second request to perform the transaction, (3) displaying, under instruction of the transaction framework, a user interface (UI) that indicates the transaction will be performed independent from a management entity that is associated with the computing device, wherein the UI includes a first option to approve the transaction, and a second option to cancel the transaction, (4) receiving a selection of the first option to approve the transaction, wherein the transaction framework provides a transaction token to the developer entity, and the transaction token corresponds to the transaction, (5) loading, under instruction of the transaction framework, a web browser application, (6) causing the web browser application to load a website that corresponds to a developer entity associated with the software application, (7) causing, via the web browser application, the developer entity to perform the transaction, wherein, when the transaction is performed, the transaction token enables a reconciliation procedure to be carried out.

Other embodiments include a non-transitory computer readable medium configured to store instructions that, when executed by a processor included in a computing device, cause the computing device to implement the methods and techniques described in this disclosure. Yet other embodiments include hardware computing devices that include processors that can be configured to cause the hardware computing devices to implement the methods and techniques described in this disclosure.

Other aspects and advantages of the techniques will become apparent from the following detailed description taken in conjunction with the accompanying drawings which illustrate, by way of example, the principles of the described embodiments.

This Summary is provided merely for purposes of summarizing some example embodiments so as to provide a basic understanding of some aspects of the subject matter described herein. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

The included drawings are for illustrative purposes and serve only to provide examples of possible structures and arrangements for the disclosed apparatuses and methods for providing wireless computing devices. These drawings in no way limit any changes in form and detail that may be made to the embodiments by one skilled in the art without departing from the spirit and scope of the embodiments. The embodiments will be readily understood by the following detailed description in conjunction with the accompanying drawings, wherein like reference numerals designate like structural elements.
FIG. 1 illustrates a block diagram of different components of a system that can be configured to implement the various techniques described herein, according to some embodiments.
FIGS. 2A-2B illustrate sequence diagrams of example techniques for managing transaction tokens that enable reconciliation procedures to be carried out, according to some embodiments.
FIG. 2C illustrates a sequence diagram of techniques for carrying out a reconciliation procedure, according to some embodiments.
FIG. 3 illustrates conceptual diagrams of example user interfaces of a software application that can be displayed when performing an in-app transaction on a computing device, according to some embodiments.
FIGS. 4A-4B illustrate conceptual diagrams of example user interfaces that can be displayed when performing a link-out transaction on a computing device, according to some embodiments.
FIG. 5 illustrates a method for managing transaction tokens to facilitate reconciliation procedures, according to some embodiments. In particular, the method pertains to steps that can be carried out by a transaction framework implemented on a computing device.
FIG. 6 illustrates a method for managing transaction tokens to facilitate reconciliation procedures, according to some embodiments. In particular, the method pertains to steps that can be carried out by a management entity.
FIG. 7 illustrates a method for managing transaction tokens to facilitate reconciliation procedures, according to some embodiments. In particular, the method pertains to steps for performing an in-app transaction that can be carried out by a software application executing on a computing device.
FIG. 8 illustrates a method for managing transaction tokens to facilitate reconciliation procedures, according to some embodiments. In particular, the method pertains to steps for performing link-out transaction that can be carried out by a software application and a web browser application executing on a computing device.
FIG. 9 illustrates a detailed view of a computing device that can be used to implement the various techniques described herein, according to some embodiments.

### DETAILED DESCRIPTION

Representative applications of apparatuses and methods according to the presently described embodiments are provided in this section. These examples are being provided solely to add context and aid in the understanding of the described embodiments. It will thus be apparent to one skilled in the art that the presently described embodiments can be practiced without some or all of these specific details. In other instances, well known process steps have not been described in detail in order to avoid unnecessarily obscuring the presently described embodiments. Other applications are possible, such that the following examples should not be taken as limiting.

In the following detailed description, references are made to the accompanying drawings, which form a part of the description, and in which are shown, by way of illustration, specific embodiments in accordance with the described embodiments. Although these embodiments are described in sufficient detail to enable one skilled in the art to practice the described embodiments, it is understood that these examples are not limiting; such that other embodiments may be used, and changes may be made without departing from the spirit and scope of the described embodiments.

The described embodiments relate generally to techniques for tracking transactions. More particularly, the described embodiments provide techniques for managing transaction tokens that enable reconciliation procedures to be carried out.

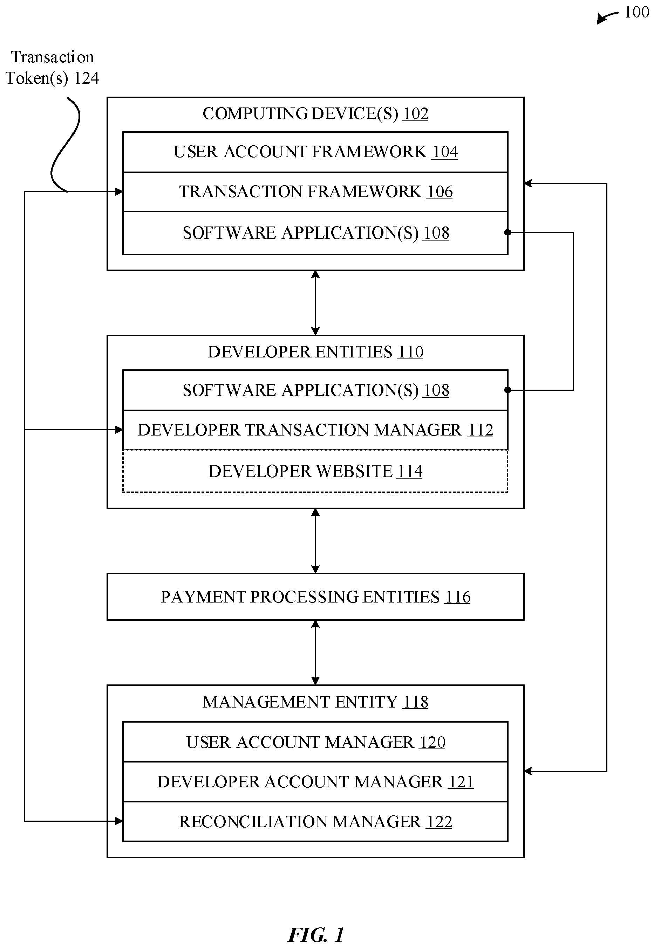

These and other embodiments are discussed below with reference to FIGS. 1-9; however, those skilled in the art will readily appreciate that the detailed description given herein with respect to these figures is for explanatory purposes only and should not be construed as limiting.

FIG. 1 illustrates a block diagram of different components of system 100 for implementing the various techniques described herein, according to some embodiments. As shown in FIG. 1, the system 100 can include one or more computing devices 102, one or more developer entities 110, one or more payment processing entities 116, and a management entity 118.

As shown in FIG. 1, a number of software applications 108 can be installed on a given computing device 102, and the computing device 102 can implement a user account framework 104 and a transaction framework 106. According to some embodiments, the user account framework 104 can represent an Application Programming Interface (API) that enables one or more user accounts to be associated with (e.g., logged into) the computing device 102. For example, when a user of a given computing device 102 enters, onto the computing device 102, credentials (e.g., a unique username and a password) for a user account, the user account framework 104 can provide the credentials to a user account manager 120 (implemented on the management entity 118, and described below in greater detail).

When the user account manager 120 receives the credentials, the user account manager 120 can reference user accounts that are known to (i.e., registered with) the user account manager 120 to determine whether the credentials are valid. The user account manager 120 can then indicate, to the user account framework 104, whether the credentials are valid. When the credentials are valid, the user account framework 104 can store the credentials and utilize the credentials to access services that are provided by the management entity 118. When the credentials are invalid, the user can perform steps until valid credentials are provided. In any case, when valid credentials are stored by the user account framework 104, the user account framework 104 can periodically interface with the user account manager 120 to determine whether access to the aforementioned services should remain intact. For example, the user account framework 104 / user account manager 120 can periodically require verifications to be performed to enable the user account to be actively "logged-in" to the computing device 102.

As described above, the computing device 102 can be configured to implement the transaction framework 106, which can also represent an API. According to some embodiments, the transaction framework 106 can be accessed by the software applications 108 to enable a variety of functionalities to be performed. In particular, a given software application 108 can interface with the transaction framework 106 when the software application 108 is preparing to engage in a transaction with a user of the software application 108 / computing device 102. In turn, the transaction framework 106 can interface with a reconciliation manager 122 (implemented on the management entity 118, and described below in greater detail) and request the reconciliation manager 122 to generate / provide a transaction token 124 that is specific to the transaction. The transaction framework 106 can then store the transaction token 124 that is received from the reconciliation manager 122. In turn, and in conjunction with performing the transaction, the transaction token 124 can be provided to the software application 108, a developer website 114 associated with the developer entity 110, a developer transaction manager 112 associated with the developer entity 110, other entities not illustrated in FIG. 1, or some combination thereof. The transaction token 124 can then be used by at least one of the foregoing entities to perform reconciliation procedures described herein.

According to some embodiments, and as shown in FIG. 1, a given developer entity 110 can collectively represent one or more parties involved in the development, management, publication, etc., of software applications 108. For example, the developer entity 110 can collectively represent a company, individual developers, and so on, as well as one or more computing devices that are utilized by such parties. As described herein, the developer entity 110 can implement a developer transaction manager 112, and, optionally, a developer website 114. According to some embodiments, the developer transaction manager 112 can be configured to facilitate transactions for the software applications 108 associated with the developer entity 110. In particular, the developer transaction manager 112 can receive transaction tokens 124, requests to perform transactions that correspond to the transaction tokens 124, and then interface with payment processing entities 116 to facilitate the transactions.

According to some embodiments, varying approaches can be utilized to enable a transaction to be processed in accordance with a given transaction token 124 / corresponding transaction request. In particular, a first approach-referred to herein as an "in-app" purchase-involves the software application 108 (itself) receiving the transaction token 124 from the transaction framework 106, and then providing the transaction token 124 / corresponding transaction request to the developer transaction manager 112 for processing (e.g., using a payment processing entity 116). A second approach-referred to herein as a "link-out" purchase-involves the software application 108 / transaction framework 106 causing a web browser application to load the developer website 114 (e.g., a payment webpage), and then providing the transaction request to the developer website 114 for processing. The second approach also involves the developer website 114 receiving the transaction token 124 from the transaction framework 106. In turn, the developer website 114 and the developer transaction manager 112 can process the transaction (e.g., using a payment processing entity 116). It is noted that the foregoing examples are not meant to be limiting, and that the approaches described herein can include transferring any amount, type, form, etc., of information, at any level of granularity, between any number, type, form, etc., of entities, to process transactions consistent with the scope of this disclosure. In any case, at the conclusion of the transaction, the developer transaction manager 112 can update the transaction token 124 to reflect whether the transaction succeeded, failed, etc., and can provide transaction results to the software application 108 (as well as the web browser application, under link-out purchase scenarios).

Additionally, the developer transaction manager 112 can be configured to interface with the reconciliation manager 122 to perform reconciliation procedures. The developer transaction manager 112 can interface with the reconciliation manager 122 when any number, type, form, etc., of condition(s) occur, such as periodically, when a threshold number of transactions are successfully processed, and so on. In any case, the developer transaction manager 112 can provide, to the reconciliation manager 122, transaction tokens 124 for transactions that were successfully processed. In turn, and as described in greater detail herein, the reconciliation manager 122 can interface with the payment processing entities 116 to facilitate additional transactions that correspond to the transaction tokens 124 (e.g., commission payments, rewards, etc., that are based on the transactions to which the transaction tokens 124 correspond). The reconciliation manager 122 can then provide, to the developer transaction manager 112, a report that is based at least in part on the additional transactions.

As shown in FIG. 1, a given payment processing entity 116 can collectively represent one or more parties involved in processing payments (also referred to herein as transactions). For example, the parties can include payment gateways, financial institutions, etc., that are communicatively coupled to one another and configured to process payments between different entities. In one example, the payment processing entities 116 can process payments made by users of computing devices 102 to the developer entities 110. In another example, the payment processing entities 116 can process payments made by the developer entities 110 to the management entity 118 (described below in greater detail). It is noted that the foregoing examples are not meant to be limiting, and that the payments described herein can include any number, type, form, etc., of payment(s), at any level of granularity, consistent with the scope of this disclosure.

According to some embodiments, the management entity 118 can collectively represent one or more entities configured to interact with the computing devices 102, the developer entities 110, the payment processing entities 116, and so on. As shown in FIG. 1, the management entity 118 can implement the user account manager 120 (described above, and in greater detail below), a developer account manager 121, and the reconciliation manager 122 (described above, and in greater detail below). According to some embodiments, the developer account manager 121 can be configured to maintain developer accounts that are known to the developer account manager 121. A given developer account can include, for example, credentials for the developer account (e.g., a unique username and a password). In this manner, the reconciliation manager 122 can associate transaction tokens 124 with developer accounts to enable appropriate validations to be performed when carrying out the transaction token 124 generation procedures, reconciliation procedures, and so on, described herein.

According to some embodiments, and although not illustrated in FIG. 1, management entity 118 can be configured to implement a virtual software application store that receives software applications 108 from the developer entities 110, and interfaces with the computing devices 102 to manage distributions, installations, updates, deletions, etc., of the software applications 108. Under another approach, software applications 108 can be installed onto computing devices 102 independent from virtual software application stores (referred to herein as "independently-installed software applications 108"). In either case, the reconciliation procedures described herein can be performed where appropriate.

It should be understood that the various components of the computing devices illustrated in FIG. 1 are presented at a high level in the interest of simplification. For example, although not illustrated in FIG. 1, it should be appreciated that the various computing devices can include common hardware / software components that enable the above-described software entities to be implemented. For example, each of the computing devices can include one or more processors that, in conjunction with one or more volatile memories (e.g., a dynamic random-access memory (DRAM)) and one or more storage devices (e.g., hard drives, solid-state drives (SSDs), etc.), enable the various software entities described herein to be executed. Moreover, each of the computing devices can include communications components that enable the computing devices to transmit information between one another.

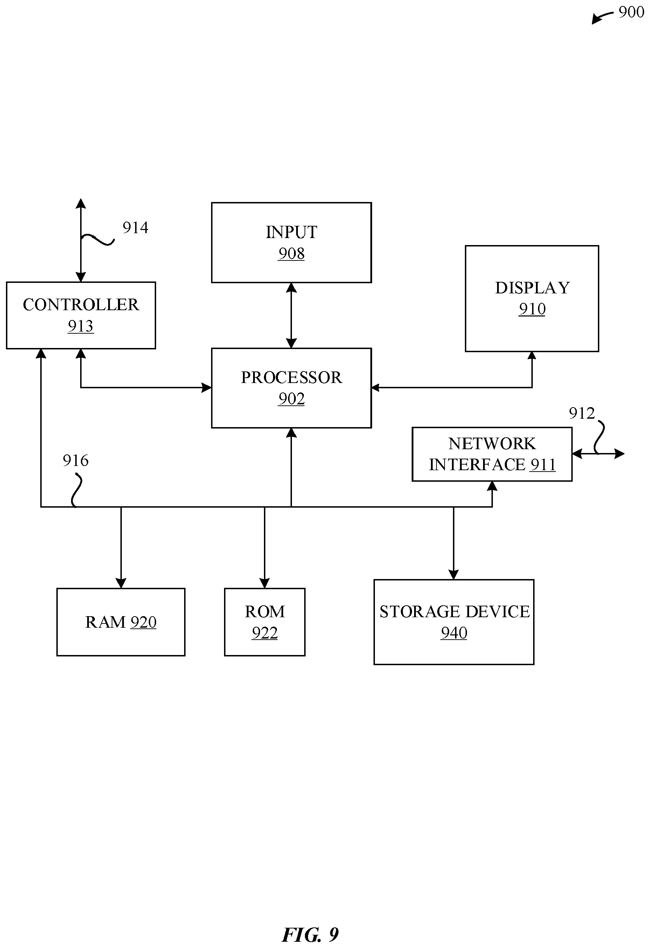

A more detailed explanation of these hardware components is provided below in conjunction with FIG. 9. It should additionally be understood that the computing devices can include additional entities that enable the implementation of the various techniques described herein without departing from the scope of this disclosure. It should additionally be understood that the entities described herein can be combined or split into additional entities without departing from the scope of this disclosure. It should further be understood that the various entities described herein can be implemented using software-based or hardware-based approaches without departing from the scope of this disclosure.

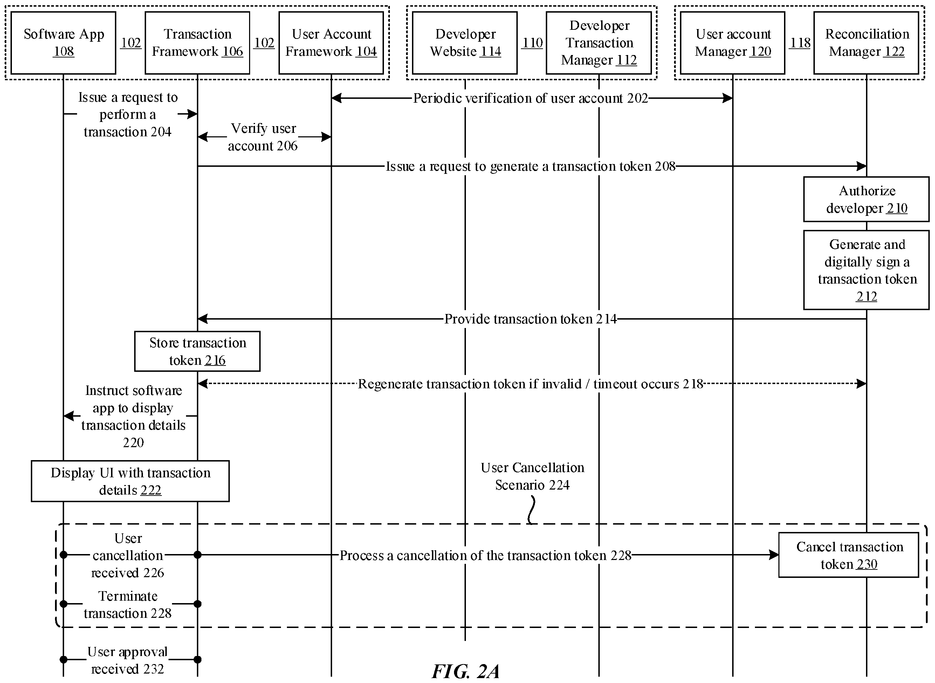

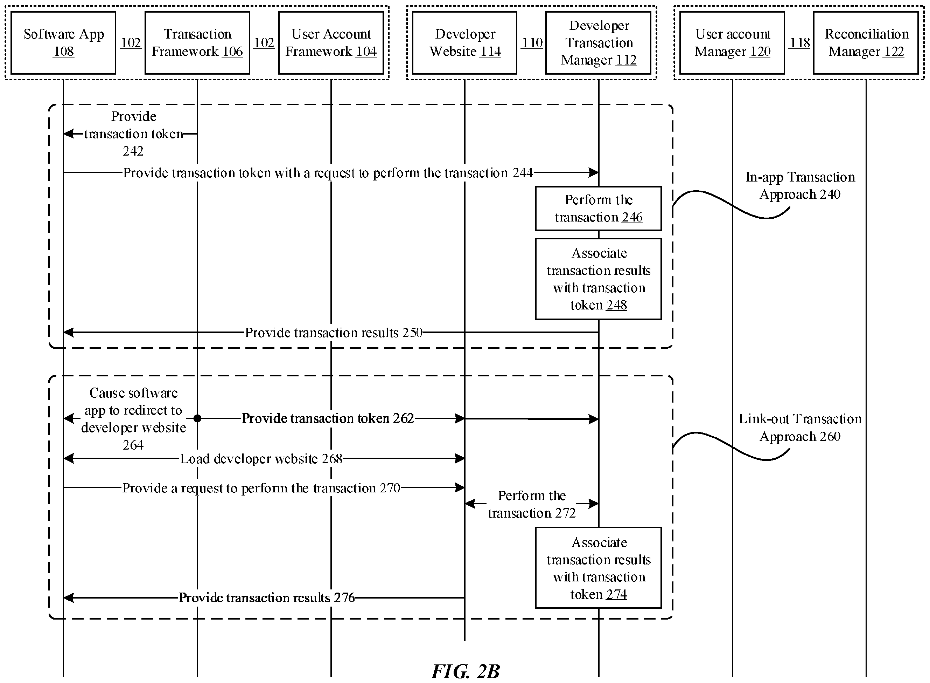

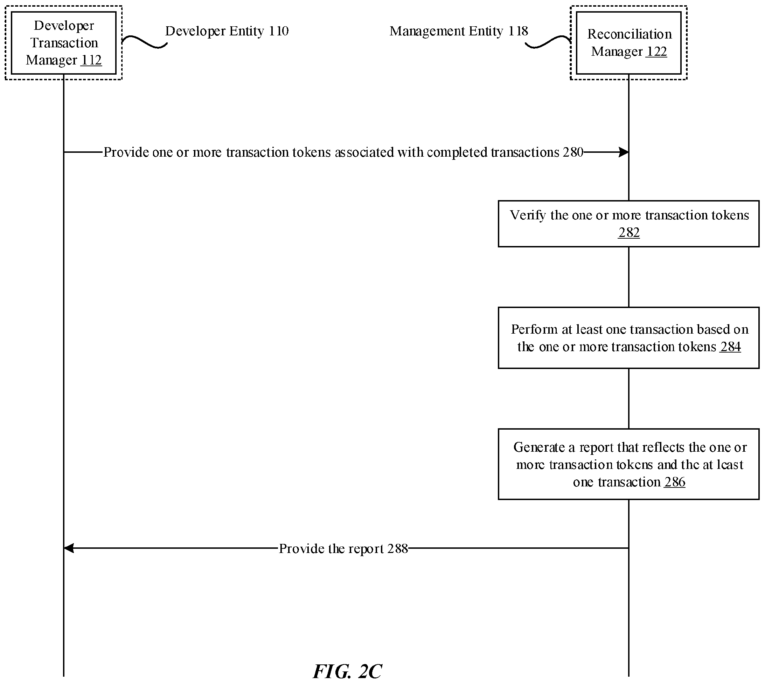

Accordingly, FIG. 1 provides an overview of the manner in which the system 100 can implement the various techniques described herein, according to some embodiments. A more detailed breakdown of the manner in which these techniques can be implemented will now be provided below in conjunction with FIGS. 2-9.

FIGS. 2A-2B illustrate sequence diagrams of example techniques for managing transaction tokens 124 that enable reconciliation procedures to be carried out, according to some embodiments. As shown in FIG. 2A, at step 202, the user account framework 104 (implemented on a computing device 102) and the user account manager 120 (implemented by the management entity 118) periodically verify a user account that is logged into the computing device 102 (and known to the user account manager 120) (e.g., as described above in conjunction with FIG. 1).

At step 204, a software application 108 executing on the computing device 102 issues, to the transaction framework 106, a request to perform a transaction. The software application 108 can issue the request under myriad scenarios, e.g., when a user of the software application 108 seeks to perform a transaction associated with the software application 108, e.g., purchasing a license to use the software application 108, purchasing goods or services made available through the software application 108, and so on. It is noted that the foregoing examples are not meant to be limiting, and that the software application 108 can perform step 204, individually or repeatedly, in response to amount, type, form, etc., of scenario(s) taking place, at any level of granularity, consistent with the scope of this disclosure.

At step 206, the transaction framework 106 interacts with the user account framework 104 to verify the user account. As described above in conjunction with step 202, the user account framework 104 maintains whether the user account is actively (i.e., validly) logged into the computing device 102. In this manner, the transaction framework 106 can function as an initial barrier that prevents requests for transaction tokens 124 from being issued to the reconciliation manager 122 when the user account is not actively logged into the computing device 102. When such a prevention occurs, the user account framework 104 can request the user to perform steps that result in an actively logged-in user account on the computing device 102, e.g., by providing login credentials to the user account (e.g., via a login user interface (UI)), by performing security verifications, and so on. It is noted that the foregoing examples are not meant to be limiting, and that the login steps can include any amount, type, form, etc., of procedure(s), at any level of granularity, consistent with the scope of this disclosure.

At step 208, the transaction framework 106 issues, to the reconciliation manager 122 executing on the management entity 118, a request to generate a transaction token 124. According to some embodiments, the request can include a session identifier associated with the request. The session identifier can represent a unique identifier for the request that is generated using an approach that is understood by both the transaction framework 106 and the reconciliation manager 122. The session identifier can beneficially enable both the transaction framework 106 and the reconciliation manager 122 to organize and maintain communications related to the request. In some embodiments, the session identifier can be digitally signed using a private encryption key, where the user account manager 120 is in possession of a counterpart public encryption key (to the private encryption key) that can be used to verify the digital signature. In this manner, reconciliation manager 122 can interface with the user account manager 120 to identify whether the digital signature included in the session identifier corresponds to a user account that is known to the user account manager 120 / management entity 118), that is confirmed by the user account manager 120 to be actively logged into the computing device 102, and so on. It should be appreciated that symmetric encryption keys can also be utilized to carry out the foregoing encryption, verification, etc., procedures. It is noted that the foregoing examples are not meant to be limiting, and that the session identifier can include any amount, type, form, etc., of information, at any level of granularity, consistent with the scope of this disclosure.

According to some embodiments, the request can also include a unique identifier associated with the software application 108. According to some embodiments, the reconciliation manager 122 can provide, to the developer account manager 121, the unique identifier associated with the software application 108. In turn, the developer account manager 121 can utilize the unique identifier to identify a developer entity 110 that is associated with the software application 108 (and known to the developer account manager 121 / management entity 118). If the software application 108 and/or the developer entity 110 are unrecognized, or if either is flagged as ineligible to issue requests for transaction tokens 124, or the like, then an appropriate denial can be issued back to the transaction framework 106 (that issued the request for the transaction token 124 at step 208). It is noted that the foregoing examples are not meant to be limiting, and that the unique identifier can include any amount, type, form, etc., of information, at any level of granularity, consistent with the scope of this disclosure. For example, the unique identifier can include both the unique identifier of the software application 108 and the developer entity 110, the request can include the unique identifier of the developer entity 110 (in addition to the unique identifier of the software application 108), and so on.

According to some embodiments, the request can also include transaction type information (relevant to the transaction referenced in step 204). For example, the transaction type information can indicate whether the transaction will take place through the software application 108 (i.e., an in-app transaction), through at least one webpage that is loaded in a web browser application executing on the computing device 102 (i.e., a link-out transaction), and the like. It is noted that the foregoing examples are not meant to be limiting, and that the transaction type information can include any amount, type, form, etc., of information, at any level of granularity, consistent with the scope of this disclosure.

According to some embodiments, the request can also include storefront information that includes locale, currency, tax, and commission information associated with the software application 108, computing device 102, the transaction (referenced in step 204), and the like. For example, the locale information can indicate the geographical area in which the computing device 102 is operating, a geographical area in which the developer entity 110 is operating, and so on. The currency information can indicate the type of currency that will be utilized to carry out the transaction, including fiat currencies, electronic currencies, and the like. The tax information can indicate the type of tax, the tax rate, etc., that will be charged in conjunction with the transaction. The commission information can indicate the type of commission, the commission rate, etc., that should be charged (e.g., by the reconciliation manager 122) after the transaction has been successfully executed.

As a brief aside, it is noted that the token generation request (issued at step 208) can also include pricing information associated with the transaction (referenced in step 204). Under this approach, the transaction token 124 (that is generated in response to the token generation request) can include the pricing information. In this regard, when the transaction is processed-and, subsequently, when a reconciliation procedure is carried out for the transaction-the transaction token 124 includes the relevant pricing information needed to carry out the reconciliation procedure (e.g., calculating a commission owed to the reconciliation manager 122 based on the pricing information). In an alternative approach, pricing information can be excluded from the transaction token 124. In this regard, when the transaction is processed-and, subsequently, when a reconciliation procedure is carried out for the transaction-the pricing information that corresponds to the transaction token 124 can be provided (to the reconciliation manager 122) along with the transaction token 124. This approach can be beneficial in that it enables transaction tokens 124 to remain useful even when anticipated transaction metrics (e.g., prices, quantities, etc.) between the generation of the transaction token 124 and the completion of the transaction. It is noted that the foregoing examples are not meant to be limiting, and that the pricing information can be preserved, communicated, etc., using any number, type, form, etc., of approach(es), at any level of granularity, consistent with the scope of this disclosure.

At step 210, the reconciliation manager 122 authorizes a developer entity 110 associated with the software application 108 (e.g., by looking up / verifying the developer entity 110 using the unique identifiers associated with the software application 108 / developer entity 110). Step 210 can help boost overall security by ensuring that the reconciliation manager 122 does not generate transaction tokens 124 for unauthorized software applications 108 / developer entities 110.

At step 212, the reconciliation manager 122 generates and digitally signs a transaction token 124. According to some embodiments, the transaction token 124 can include the information included in the token generation request (issued at step 208), information derived from the information included in the token generation request, other information obtained in association with the token generation request, and so on. According to some embodiments, the reconciliation manager 122 can utilize a private encryption key to digitally sign the transaction token 124, where one or more of the transaction framework 106, the software application 108, the developer entity 110, etc., have access to a counterpart public encryption key (to the private encryption key) that can be utilized to verify the digital signature. It should be appreciated that symmetric encryption keys can also be utilized to carry out the foregoing encryption, verification, etc., procedures. It is noted that the foregoing examples are not meant to be limiting, and that the transaction token 124 can include any amount, type, form, etc., of information, at any level of granularity, consistent with the scope of this disclosure. In any case, at step 214, the reconciliation manager 122 provides the transaction token 124 to the transaction framework 106, and, at step 216, the transaction framework 106 stores the transaction token 124.

At optional step 218, the transaction framework 106 and the reconciliation manager 122 can work together to optionally regenerate the transaction token 124 if the transaction token 124 is invalidated (e.g., the transaction token 124 becomes corrupted, a timeout occurs, etc.). In particular, if the invalidated transaction token 124 is regenerated, then relevant / appropriate updates can be performed by the reconciliation manager 122 and the transaction framework 106 to re-validate the transaction token 124. Alternatively, if the invalidated transaction token 124 is replaced with a new transaction token 124, then relevant / appropriate updates can be performed by the reconciliation manager 122 and the transaction framework 106 (e.g., by carrying out steps similar to those described below under a user cancellation scenario 224).

At step 220, the transaction framework 106 instructs the software application 108 to display details associated with the transaction. As previously described herein, the transaction framework 106 can be implemented as an API that is accessed by the software application 108. In this regard, under one example approach, the transaction framework 106 can issue a command to the software application 108 to cause the details (associated with the transaction) to be displayed within the software application 108 (e.g., via a notification UI that is displayed within the software application 108). Under another example, approach, the transaction framework 106 can cause an overlay to be displayed independent from the software application 108 (e.g., by issuing a command to an operating system (OS) implemented on the computing device 102). It is noted that the foregoing examples are not meant to be limiting, and that the details can be displayed on the computing device 102 using any amount, type, form, etc., of user interface(s), at any level of granularity, consistent with the scope of this disclosure.

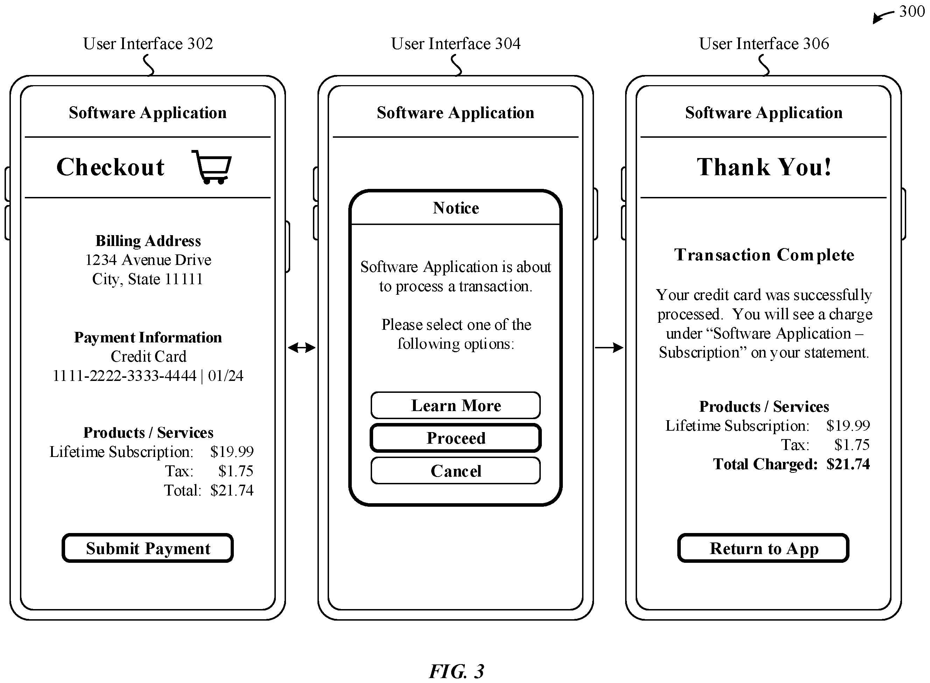

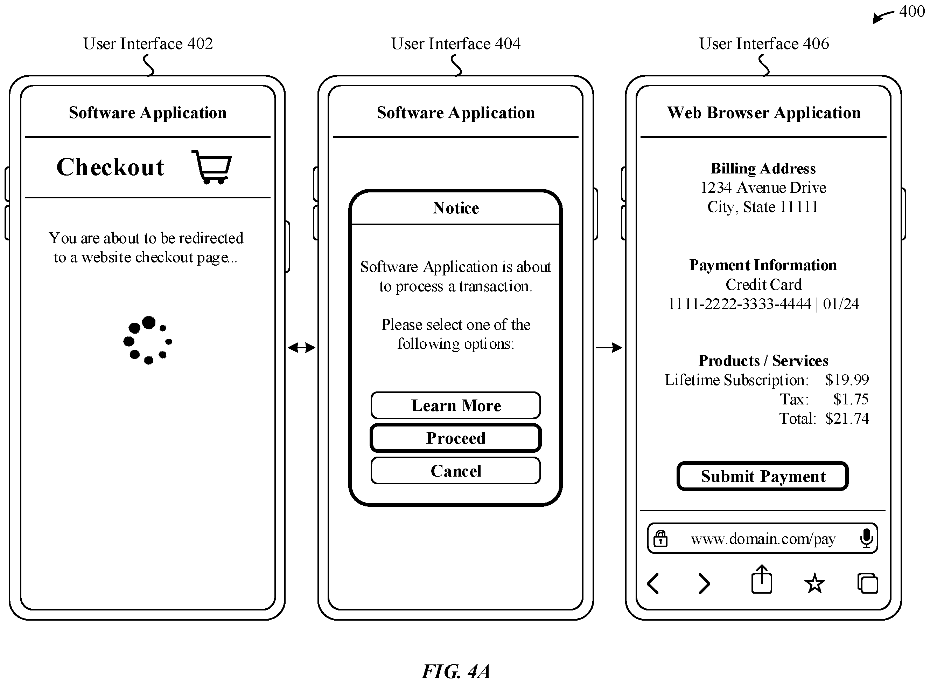

At step 222, the software application 108 / transaction framework 106 displays a UI that includes the transaction details. Example implementations of the UI are illustrated as user interface 304 in FIG. 3 and user interface 404 in FIG. 4A. As shown in FIGS. 3 and 4A, the UI can include an option to learn more about the transaction, to proceed with (i.e., approve) the transaction, or to cancel the transaction (the details of which are described below in conjunction with FIGS. 3 and 4A-4B).

Accordingly, FIG. 2A illustrates a user cancellation scenario 224 that includes a series of steps that can be carried out when a user requests a cancellation of the transaction via the UI. Alternatively, in the event that the user approves the transaction (at step 232), then the remaining steps illustrated in FIG. 2B (and described below) can be performed. At step 226, the software application 108 / transaction framework 106 receives a cancellation from the user via the UI. At step 228, the transaction framework 106 and the reconciliation manager 122 process a cancellation of the transaction token 124. In particular, the transaction framework 106 cancels (e.g., delete, invalidate, etc.) the transaction token 124 (received from the reconciliation manager 122 at step 214), and issues, to the reconciliation manager 122, a request to cancel (e.g., delete, invalidate, etc.) the transaction token 124. In turn, at step 230, the reconciliation manager 122 cancels (e.g., deletes, invalidates, etc.) the transaction token.

As a brief aside, it is noted that one or more of steps 220-232 can be omitted from the techniques described herein, without departing from the scope of this disclosure. For example, a configuration of the reconciliation manager 122, the transaction framework 106, the OS implemented on the computing device 102, etc., can be updated such that the information / UIs discussed above in conjunction with steps 220-232 are not presented at the computing device 102 when a transaction token 124 is received / a transaction is about to be performed. The configuration can be implemented at any level of granularity, e.g., a user can opt to receive a notification when a transaction is about to be performed, but opt to not require the user to approve / cancel the transaction each time a notification is displayed. It is noted that the foregoing examples are not meant to be limiting, and that the techniques described herein can be adjusted to accommodate user preferences, trust levels between the management entity 118 and the developer entities 110 / software applications 108, etc., consistent with the scope of this disclosure.

FIG. 2B illustrates different steps that can be carried out in accordance with a type of the transaction that is taking place (e.g., as indicated in the transaction type information discussed herein). In particular, an in-app transaction approach 240 includes a series of steps that can be carried out when the transaction is to be performed within the software application 108 itself (referred to herein as an "in-app" transaction). Alternatively, a link-out transaction approach 260 includes a series of steps that can be carried out when the transaction is to be performed via a webpage that is loaded into a web browser application that is embedded within the software application 108, overlaid onto the software application 108, or the like (referred to herein as a "link-out" transaction).

As shown in FIG. 2B, the in-app transaction approach 240 involves a first step 242, where the transaction framework 106 provides the transaction token 124 to the software application 108. Optionally, the transaction framework 106 can provide the transaction token 124 to the developer website 114, the developer transaction manager 112, etc. (alternatively to, or in addition to, providing the transaction token 124 to the software application 108). At step 244, the software application 108 provides, to the developer transaction manager 112 (associated with the developer entity 110), the transaction token 124 with a request to perform the transaction. Step 244 can occur, for example, in response to a user selecting, via a UI of the software application 108, an option to perform the transaction. The requestion to perform the transaction can include, for example, prices, quantities, etc., of goods / services associated with the transaction, billing address information, shipping address information, payment information, and the like. It is noted that the foregoing examples are not meant to be limiting, and that the request to perform the transaction can include any amount, type, form, etc., of information, at any level of granularity, consistent with the scope of this disclosure.

At step 246, the developer transaction manager 112 performs the transaction. Step 246 can involve, for example, the developer transaction manager 112 interfacing with at least one payment processing entity 116 to effectively process the transaction. At step 248, the developer transaction manager 112 associates results of the transaction (i.e., transaction results) with the transaction token 124. In particular, if the transaction is successful, then the transaction results can indicate that the transaction was successful, pricing information associated with the transaction, and so on. If the transaction is unsuccessful, then the transaction results can indicate that the transaction was unsuccessful, information about why the transaction was not successful, and so on. It is noted that the foregoing examples are not meant to be limiting, and that the transaction results associated with the transaction token 124 can include any amount, type, form, etc., of information, at any level of granularity, consistent with the scope of this disclosure.

At step 250, the developer transaction manager 112 also provides transaction results to the software application 108. According to some embodiments, the transaction results provided to the software application 108 can include information similar to the information included in the transaction results associated with the transaction token 124, information derived therefrom, or other information that is germane to the transaction. For example, the transaction results provided to the software application 108 can include information about whether the transaction was successful or failed, order identifier information, order processing information, shipment tracking information, and so on. It is noted that the foregoing examples are not meant to be limiting, and that the transaction results provided to the software application 108 can include any amount, type, form, etc., of information, at any level of granularity, consistent with the scope of this disclosure.

As shown in FIG. 2B, the link-out transaction approach 260 can differ from the in-app transaction approach 240 in a few aspects. In particular, the link-out transaction approach 260 involves a first step 262, where the transaction framework 106 provides the transaction token 124 to a developer website 114 (associated with the developer entity 110). Optionally, the transaction framework 106 can provide the transaction token 124 to the software application 108, the developer transaction manager 112, etc. (alternatively to, or in addition to, providing the transaction token 124 to the developer website 114), the developer website 114 can also provide the transaction token 124 to the developer transaction manager 112, and so on.

At step 264, the transaction framework 106 causes the software application 108 to redirect to the developer website 114. As described herein, the transaction framework 106 can cause the software application 108 to load an embedded web browser application, can cause the OS implemented on the computing device 102 to load the web browser application (e.g., overlaid onto the software application 108), and so on. In any case, step 268 involves the software application 108, the transaction framework 106, and the developer website 114 working together to load / display the developer website 114 at the computing device 102. According to some embodiments, the software application 108 can provide, to the transaction framework 106, a uniform resource locator (URL) that corresponds to the developer website 114-where, in turn, the transaction framework 106 provides the URL to the aforementioned web browser application (to cause the developer website 114 to be loaded within the web browser application). According to some embodiments, the URL can include parameters that enable the developer website 114 to reflect the transaction (e.g., product / service information, pricing information, payment information, billing address information, shipping address information, etc.).

At step 270, the software application 108 / web browser application provide, to the developer website 114, a request to perform the transaction. Step 270 can occur, for example, in response to a user selecting, via a UI of the developer website 114, an option to perform the transaction. At step 272, the developer website 114 and the developer transaction manager 112 perform the transaction. Step 272 can involve, for example, the developer website 114, the developer transaction manager 112, etc., interfacing with at least one payment processing entity 116 to perform the transaction. Ate step 274, the developer transaction manager 112 associates results of the transaction (i.e., transaction results) with the transaction token 124 (e.g., consistent with the techniques described above in conjunction with step 248). At step 276, the developer website 114 provides transaction results to the software application 108 / web browser application (e.g., consistent with the techniques described above in conjunction with step 250).

Accordingly, FIGS. 2A-2B provide techniques for managing transaction tokens that enable reconciliation procedures to be carried out, according to some embodiments. Additionally, FIG. 2C illustrates a sequence diagram of techniques for carrying out a reconciliation procedure, according to some embodiments. As shown in FIG. 2C, the reconciliation procedure can include a step 280, where the developer transaction manager 112 provides, to the reconciliation manager 122, one or more transaction tokens 124 associated with completed transactions. The developer transaction manager 112 can perform step 280 in response to different conditions being satisfied. For example, the developer transaction manager 112 can perform step 280 each time a transaction associated with a transaction token 124 is successfully completed. In another example, the developer transaction manager 112 can perform step 280 after a threshold number of transactions associated with transaction tokens 124 are successfully completed. In yet another example, the developer transaction manager 112 can perform step 280 periodically, e.g., at the end of each day, each week, each month, and so on. It is noted that the foregoing examples are not meant to be limiting, and that the conditions can include any amount, type, form, etc., of condition(s), at any level of granularity, consistent with the scope of this disclosure. In any case, and as previously described herein, the transaction tokens 124 can include pricing (and other) information that is relevant to the reconciliation procedure-or, alternatively, the developer transaction manager 112 can store associated information for the transaction tokens 124, where the associated information includes the pricing information. Accordingly, at step 280, the information transmitted by the developer transaction manager 112 to the reconciliation manager 122 includes the transaction tokens 124-and, when appropriate, the aforementioned associated information-to enable a reconciliation procedure to be effectively performed.

At step 282, the reconciliation manager 122 verifies the one or more transaction tokens 124. The verification can be performed, for example, by validating the digital signatures originally established by the reconciliation manager 122 (and/or by validating digital signatures provided by other entities that are trusted by, can be verified by, the reconciliation manager 122). At step 284, the reconciliation manager 122 performs at least one transaction based on the one or more transaction tokens 124. For example, for a given transaction token 124 that indicates the developer entity 110 billed a customer for a particular product, service, etc., the reconciliation manager 122 can calculate a corresponding commission fee that is owed to the management entity 118. In another example, for a given transaction token 124 that indicates the developer entity 110 refunded a customer for a particular product, service, etc., the reconciliation manager 122 can identify an original commission fee that was charged to the developer entity 110, and arrange for an appropriate refund of the commission fee. It is noted that the foregoing examples are not meant to be limiting, and that the transactions performed by the reconciliation manager 122 can include any amount, type, form, etc., of transaction(s), at any level of granularity, consistent with the scope of this disclosure. It is additionally noted that the reconciliation manager 122 can store a set of rules for each developer entity 110, software application 108, etc., to effectively identify how reconciliation procedures should be carried out for a given set of transaction tokens 124. Alternatively (or additionally), one or more rules can be embedded into transaction tokens 124 so that appropriate rules can be immediately identified and carried out when performing reconciliation procedures.

At step 286, the reconciliation manager 122 generates a report that reflects the one or more transaction tokens 124 and the at least one transaction. The report can include, for example, information derived from the transaction tokens 124, information associated with the transaction tokens 124 (when provided by the developer entity 110), information associated with the reconciliation procedures performed in association with the transaction tokens 124. It is noted that the foregoing examples are not meant to be limiting, and that the report can include any amount, type, form, etc., of information, at any level of granularity, consistent with the scope of this disclosure. At step 288, the reconciliation manager 122 provides the report to the developer transaction manager 112.

Accordingly, FIG. 2C illustrates a sequence diagram of techniques for carrying out a reconciliation procedure, according to some embodiments. Additionally, FIGS. 3 and 4A-4B provide conceptual diagrams of user interfaces that can be displayed in conjunction with carrying out the techniques described herein, according to some embodiments. In particular, FIG. 3 illustrates conceptual diagrams 300 of example user interfaces of a software application 108 that can be displayed when performing an in-app transaction on a computing device 102, according to some embodiments. As shown in FIG. 3, a user interface 302 of the software application 108 can be displayed when a user is about to perform an in-app transaction through the software application 108. When the user selects an option to perform the transaction, a user interface 304 of the software application 108 is displayed, which notifies the user that the software application 108 is about to perform a transaction of which the user should be aware. When the user selects an option to proceed with the transaction, a user interface 306 of the software application 108 is displayed, which displays results of the transaction to the user.

FIGS. 4A-4B illustrate conceptual diagrams 400 of example user interfaces that can be displayed when performing a link-out transaction on a computing device 102, according to some embodiments. As shown in FIG. 4A, a user interface 402 of a software application 108 can be displayed when a user is about to perform link-out transaction through the software application 108. When the user selects an option to perform the transaction, a user interface 404 of the software application 108 is displayed, which notifies the user that the software application 108 is about to perform a transaction of which the user should be aware. When the user selects an option to proceed with the transaction, a web browser application is loaded, and a user interface 406 of the web browser application is displayed, which includes details of the transaction that is about to be performed.

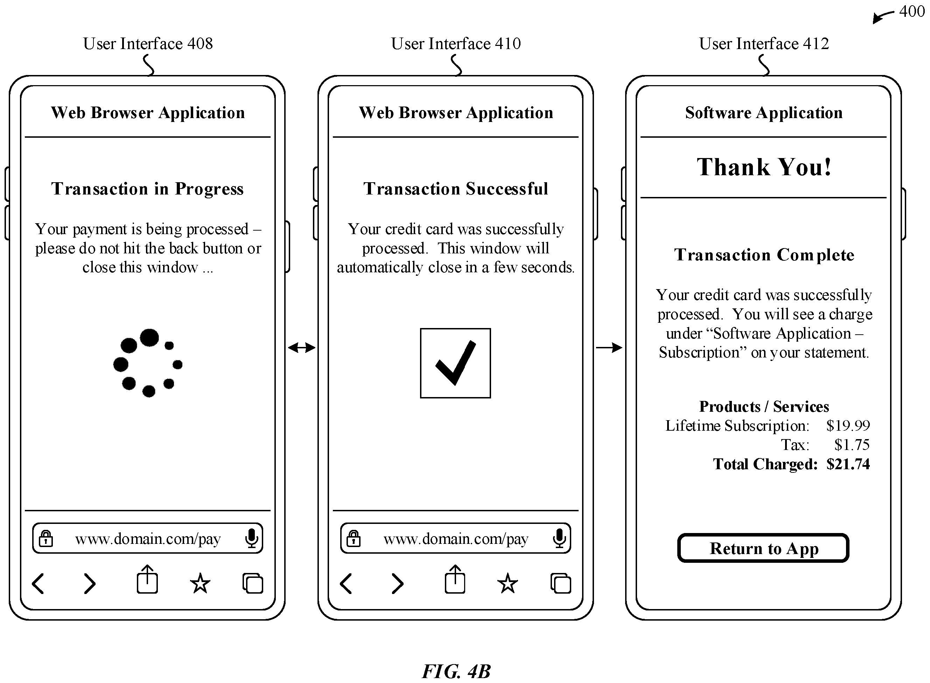

When the user selects an option to proceed with the transaction, a user interface 408 of the web browser application (illustrated in FIG. 4B) is displayed, which indicates that the transaction is being processed. When the transaction is processed, a user interface 410 of the web browser application is displayed, which indicates that the transaction was successfully processed. The user interface 410 of the web browser application also indicates that the web browser application will automatically close, whereupon the user interface of the software application 108 will be displayed again. In turn, when the web browser application is hidden, a user interface 412 of the software application 108 is displayed, which displays results of the transaction to the user.

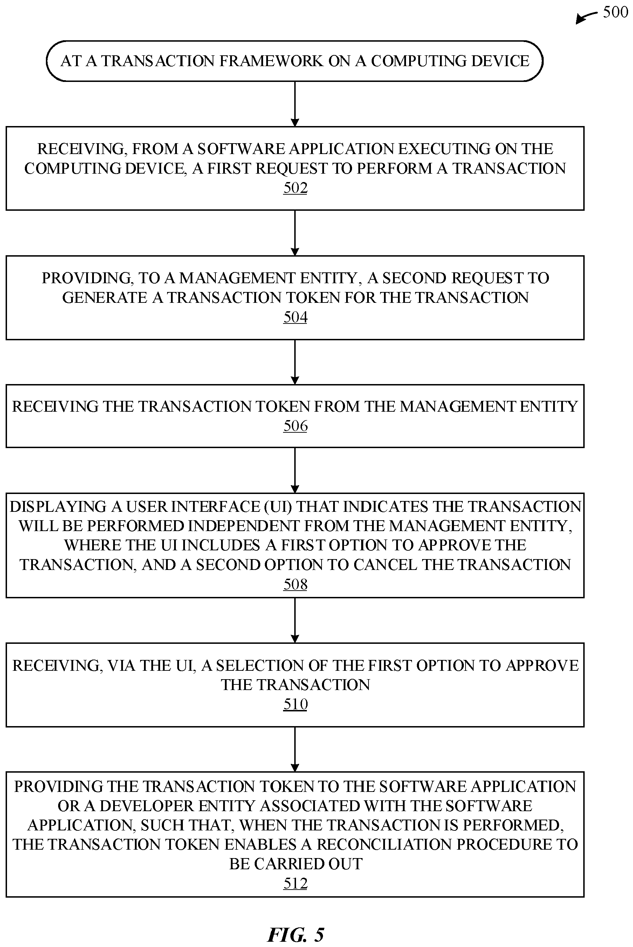

FIG. 5 illustrates a method 500 for managing transaction tokens to facilitate reconciliation procedures, according to some embodiments. In particular, the method 500 pertains to steps that can be carried out by a transaction framework 106 implemented on a computing device. As shown in FIG. 5, the method 500 begins at step 502, where the transaction framework 106 receives, from a software application executing on the computing device, a first request to perform a transaction (e.g., as described above in conjunction with FIG. 2A).

At step 504, the transaction framework 106 provides, to a management entity, a second request to generate a transaction token for the transaction (e.g., as described above in conjunction with FIG. 2A). At step 506, the transaction framework 106 receives the transaction token from the management entity (e.g., as described above in conjunction with FIG. 2A). At step 508, the transaction framework 106 displays a user interface (UI) (or causes a UI to be displayed) that indicates the transaction will be performed independent from the management entity, where the UI includes a first option to approve the transaction, and a second option to cancel the transaction (e.g., as described above in conjunction with FIG. 2A).

At step 510, the transaction framework 106 receives, via the UI, a selection of the first option to approve the transaction (e.g., as described above in conjunction with FIG. 2A). At step 512, the transaction framework 106 provides the transaction token to the software application or a developer entity associated with the software application, such that, when the transaction is performed, the transaction token enables a reconciliation procedure to be carried out (e.g., as described above in conjunction with FIG. 2C).

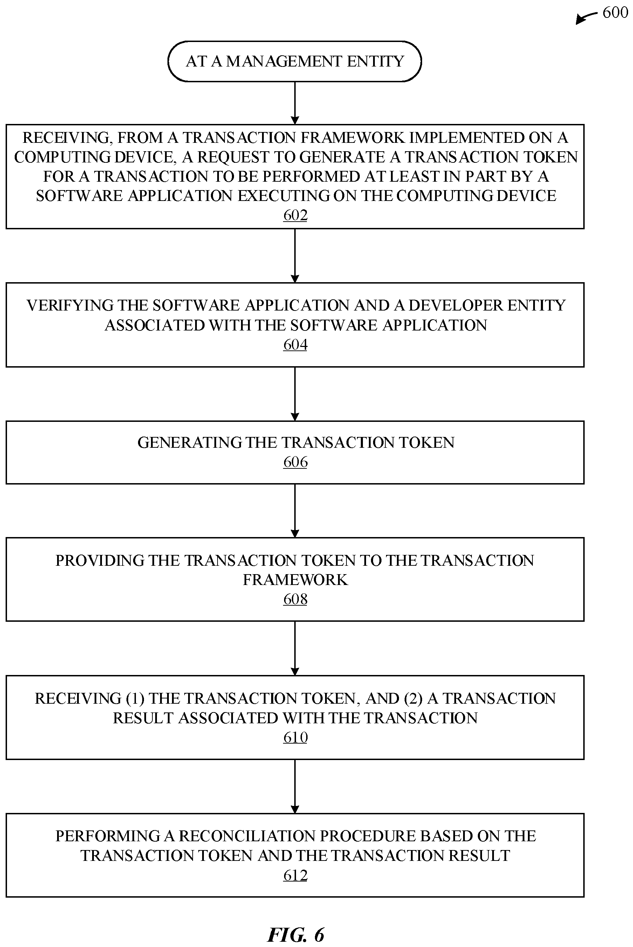

FIG. 6 illustrates a method 600 for managing transaction tokens to facilitate reconciliation procedures, according to some embodiments. In particular, the method 600 pertains to steps that can be carried out by the management entity 118. As shown in FIG. 6, the method 600 begins at step 602, where the management entity 118 receives, from a transaction framework implemented on a computing device, a request to generate a transaction token for a transaction to be performed at least in part by a software application executing on the computing device (e.g., as described above in conjunction with FIG. 2A).

At step 604, the management entity 118 verifies the software application and a developer entity associated with the software application (e.g., as described above in conjunction with FIG. 2A). At step 606, the management entity 118 generates the transaction token (e.g., as described above in conjunction with FIG. 2A). At step 608, the management entity 118 provides the transaction token to the transaction framework (e.g., as described above in conjunction with FIG. 2A).

At step 610, the management entity 118 receives (1) the transaction token, and (2) a transaction result associated with the transaction (e.g., as described above in conjunction with FIG. 2C). At step 612, the management entity 118 performs a reconciliation procedure based on the transaction token and the transaction result (e.g., as described above in conjunction with FIG. 2C).

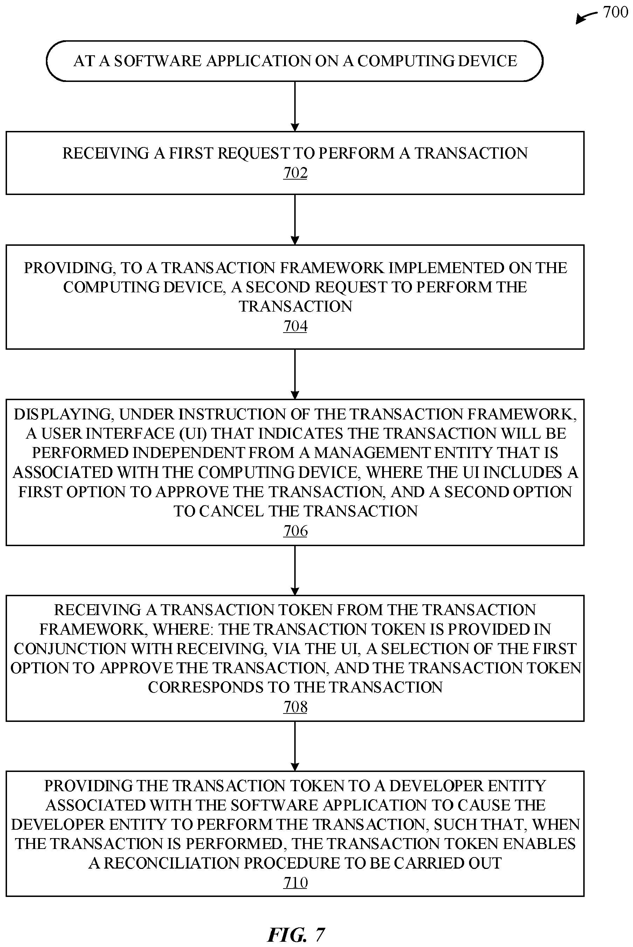

FIG. 7 illustrates a method 700 for managing transaction tokens to facilitate reconciliation procedures, according to some embodiments. In particular, the method 700 pertains to steps for performing an in-app transaction that can be carried out by a software application 108 executing on a computing device. As shown in FIG. 7, the method 700 begins at step 702, where a software application 108 executing on the computing device receives a first request to perform a transaction (e.g., as described above in conjunction with FIG. 2A).

At step 704, the software application 108 provides, to a transaction framework implemented on the computing device, a second request to perform the transaction (e.g., as described above in conjunction with FIG. 2A). At step 706, the software application 108 displays, under instruction of the transaction framework, a user interface (UI) that indicates the transaction will be performed independent from a management entity that is associated with the computing device, where the UI includes a first option to approve the transaction, and a second option to cancel the transaction (e.g., as described above in conjunction with FIG. 2A).

At step 708, the software application 108 receives a transaction token from the transaction framework, where: the transaction token is provided in conjunction with receiving, via the UI, a selection of the first option to approve the transaction, and the transaction token corresponds to the transaction (e.g., as described above in conjunction with FIGS. 2A-2B). At step 710, the software application 108 provides the transaction token to a developer entity associated with the software application to cause the developer entity to perform the transaction, such that, when the transaction is performed, the transaction token enables a reconciliation procedure to be carried out (e.g., as described above in conjunction with FIG. 2C).

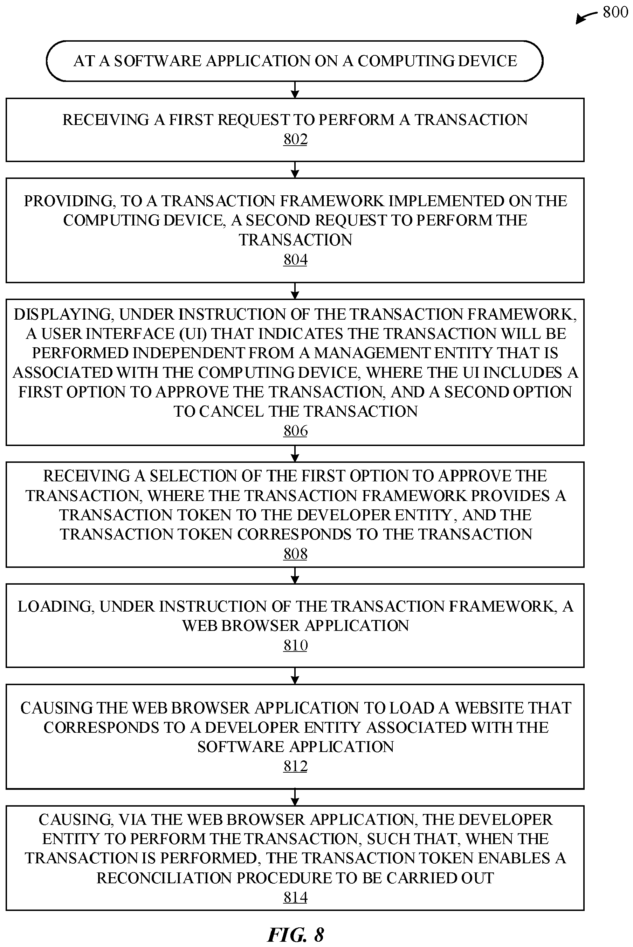

FIG. 8 illustrates a method 800 for managing transaction tokens to facilitate reconciliation procedures, according to some embodiments. In particular, the method 800 pertains to steps for performing link-out transaction that can be carried out by a software application 108 and a web browser application executing on a computing device. As shown in FIG. 8, the method 800 begins at step 802, where the software application 108 receives a first request to perform a transaction (e.g., as described above in conjunction with FIG. 2A).

At step 804, the software application 108 provides, to a transaction framework implemented on the computing device, a second request to perform the transaction (e.g., as described above in conjunction with FIG. 2A). At step 806, the software application 108 displays, under instruction of the transaction framework, a user interface (UI) that indicates the transaction will be performed independent from a management entity that is associated with the computing device, where the UI includes a first option to approve the transaction, and a second option to cancel the transaction (e.g., as described above in conjunction with FIG. 2A).

At step 808, the software application 108 receives a selection of the first option to approve the transaction, where the transaction framework provides a transaction token to the developer entity, and the transaction token corresponds to the transaction (e.g., as described above in conjunction with FIGS. 2A-2B). At step 810, the software application 108 loads, under instruction of the transaction framework, a web browser application (e.g., as described above in conjunction with FIG. 2B).

At step 812, the software application 108 causes the web browser application to load a website that corresponds to a developer entity associated with the software application (e.g., as described above in conjunction with FIG. 2B). At step 814, the software application 108 causes, via the web browser application, the developer entity to perform the transaction, such that, when the transaction is performed, the transaction token enables a reconciliation procedure to be carried out (e.g., as described above in conjunction with FIG. 2C).

FIG. 9 illustrates a detailed view of a computing device 900 that can be used to implement the various components described herein, according to some embodiments. In particular, the detailed view illustrates various components that can be included in the computing device 102, the developer entity 110, and the management entity 118.

As shown in FIG. 9, the computing device 900 can include a processor 902 that represents a microprocessor or controller for controlling the overall operation of computing device 900. The computing device 900 can also include a user input device 908 that allows a user of the computing device 900 to interact with the computing device 900. For example, the user input device 908 can take a variety of forms, such as a button, keypad, dial, touch screen, audio input interface, visual/image capture input interface, input in the form of sensor data, etc. Furthermore, the computing device 900 can include a display 910 (screen display) that can be controlled by the processor 902 to display information to the user. A data bus 916 can facilitate data transfer between at least a storage device 940, the processor 902, and a controller 913. The controller 913 can be used to interface with and control different equipment through an equipment control bus 914. The computing device 900 can also include a network/bus interface 911 that couples to a data link 912. In the case of a wireless connection, the network/bus interface 911 can include a wireless transceiver.

The computing device 900 also includes a storage device 940, which can comprise a single disk or a plurality of disks (e.g., SSDs), and includes a storage management module that manages one or more partitions within the storage device 940. In some embodiments, storage device 940 can include flash memory, semiconductor (solid state) memory or the like. The computing device 900 can also include a Random-Access Memory (RAM) 920 and a Read-Only Memory (ROM) 922. The ROM 922 can store programs, utilities, or processes to be executed in a non-volatile manner. The RAM 920 can provide volatile data storage, and stores instructions related to the operation of the computing devices described herein.

The various aspects, embodiments, implementations, or features of the described embodiments can be used separately or in any combination. Various aspects of the described embodiments can be implemented by software, hardware or a combination of hardware and software. The described embodiments can also be embodied as computer readable code on a computer readable medium. The computer readable medium is any data storage device that can store data that can be read by a computer system. Examples of the computer readable medium include read-only memory, random-access memory, CD-ROMs, DVDs, magnetic tape, hard disk drives, solid state drives, and optical data storage devices. The computer readable medium can also be distributed over network-coupled computer systems so that the computer readable code is stored and executed in a distributed fashion.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of specific embodiments are presented for purposes of illustration and description. They are not intended to be exhaustive or to limit the described embodiments to the precise forms disclosed. It will be apparent to one of ordinary skill in the art that many modifications and variations are possible in view of the above teachings.

As described herein, one aspect of the present technology is the gathering and use of data available from various sources to improve user experiences. The present disclosure contemplates that in some instances, this gathered data may include personal information data that uniquely identifies or can be used to contact or locate a specific person. Such personal information data can include demographics data, location-based data, telephone numbers, email addresses, home addresses, data or records relating to a user's health or level of fitness (e.g., vital signs measurements, medication information, exercise information), date of birth, smart home activity, or any other identifying or personal information. The present disclosure recognizes that the use of such personal information data, in the present technology, can be used to the benefit of users.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, the present technology can be configured to allow users to select to "opt in" or "opt out" of participation in the collection of personal information data during registration for services or anytime thereafter. In another example, users can select to provide only certain types of data that contribute to the techniques described herein. In addition to providing "opt in" and "opt out" options, the present disclosure contemplates providing notifications relating to the access or use of personal information. For instance, a user may be notified that their personal information data may be accessed and then reminded again just before personal information data is accessed.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

## Claims

1. A method for managing transaction tokens to facilitate reconciliation procedures, the method comprising, by a software application executing on a computing device:
receiving a first request to perform a transaction;
providing, to a transaction framework implemented on the computing device, a second request to perform the transaction;
displaying, under instruction of the transaction framework, a user interface (UI) that indicates the transaction will be performed independent from a management entity that is associated with the computing device, wherein the UI includes a first option to approve the transaction, and a second option to cancel the transaction;
receiving a selection of the first option to approve the transaction, wherein the transaction framework provides a transaction token to the developer entity, and the transaction token corresponds to the transaction;
loading, under instruction of the transaction framework, a web browser application;
causing the web browser application to load a website that corresponds to a developer entity associated with the software application;
causing, via the web browser application, the developer entity to perform the transaction, wherein, when the transaction is performed, the transaction token enables a reconciliation procedure to be carried out.

2. The method of claim 1, wherein the UI is hidden in response to receiving, via the UI, the selection of the first option to approve the transaction.

3. The method of claim 1, wherein the reconciliation procedure comprises:
performing a second transaction that is based on the transaction; and
providing, to the developer entity, a report that includes information associated with at least the second transaction.

4. The method of claim 1, wherein the transaction framework comprises an Application Programming Interface (API) that is communicatively coupled to: at least the software application and the management entity.

5. The method of claim 1, wherein the transaction token is provided in response to a third request issued by the transaction framework to the management entity, wherein the third request includes:
a session identifier associated with the third request,
a unique identifier associated with the software application,
transaction type information that defines that the transaction will take place through the website rather than through the software application, and
storefront information that includes locale, currency, tax, and commission information associated with the software application, the computing device, the transaction, or some combination thereof.

6. The method of claim 1, further comprising:
receiving transaction results from the developer entity; and
updating the transaction token based on the transaction results.

7. The method of claim 1, wherein the first request is based on a user of the software application seeking to engage in the transaction with the software application.

8. A computing device configured to manage transaction tokens to facilitate reconciliation procedures, the computing device comprising:
at least one processor; and
at least one memory storing instructions that, when executed by the at least one processor, cause the computing device to implement a software application configured to carry out steps that include:
receiving a first request to perform a transaction;
providing, to a transaction framework implemented on the computing device, a second request to perform the transaction;
displaying, under instruction of the transaction framework, a user interface (UI) that indicates the transaction will be performed independent from a management entity that is associated with the computing device, wherein the UI includes a first option to approve the transaction, and a second option to cancel the transaction;
receiving a selection of the first option to approve the transaction, wherein the transaction framework provides a transaction token to the developer entity, and the transaction token corresponds to the transaction;
loading, under instruction of the transaction framework, a web browser application;
causing the web browser application to load a website that corresponds to a developer entity associated with the software application;
causing, via the web browser application, the developer entity to perform the transaction, wherein, when the transaction is performed, the transaction token enables a reconciliation procedure to be carried out.

9. The computing device of claim 8, wherein the UI is hidden in response to receiving, via the UI, the selection of the first option to approve the transaction.

10. The computing device of claim 8, wherein the reconciliation procedure comprises:
performing a second transaction that is based on the transaction; and
providing, to the developer entity, a report that includes information associated with at least the second transaction.

11. The computing device of claim 8, wherein the transaction framework comprises an Application Programming Interface (API) that is communicatively coupled to:
at least the software application and the management entity.

12. The computing device of claim 8, wherein the transaction token is provided in response to a third request issued by the transaction framework to the management entity, wherein the third request includes:
a session identifier associated with the third request,
a unique identifier associated with the software application,
transaction type information that defines that the transaction will take place through the website rather than through the software application, and
storefront information that includes locale, currency, tax, and commission information associated with the software application, the computing device, the transaction, or some combination thereof.

13. The computing device of claim 8, wherein the steps further include:
receiving transaction results from the developer entity; and
updating the transaction token based on the transaction results.

14. The computing device of claim 8, wherein the first request is based on a user of the software application seeking to engage in the transaction with the software application.
